Europäisches Patentamt

European Patent Office

Office européen des brevets

(19)

(11) Veröffentlichungsnummer: **0 192 607**

**A1**

(12) ## EUROPÄISCHE PATENTANMELDUNG

(21) Anmeldenummer: 86810077.7

(22) Anmeldetag: 11.02.86

(51) Int. Cl.⁴: **F 16 K 31/40**

(30) Priorität: 13.02.85 CH 655/85

(43) Veröffentlichungstag der Anmeldung:
27.08.86 Patentblatt 86/35

(84) Benannte Vertragsstaaten:
AT DE FR GB IT NL SE

(71) Anmelder: Schwarz, Hans Ulrich
Städelistrasse 26
CH-9403 Goldach(CH)

(72) Erfinder: Schwarz, Hans Ulrich
Städelistrasse 26
CH-9403 Goldach(CH)

(72) Erfinder: Wieland, Anreas
Guggeienhof 29
CH-9016 St. Gallen(CH)

(74) Vertreter: Gachnang, Hans Rudolf
Algisserstrasse 33
CH-8500 Frauenfeld(CH)

(54) **Hydraulisches Düsenventil.**

(57) Ein hydraulisches Ventil, das in einem Gehäuse (1) eingesetzt ist, in dem ein zu versprühendes Medium (13) unter Druck (p) eingespeist wird. Das Oeffnen des Ventilkolbens (35) erfolgt indirekt durch einen Elektromagneten (39), mit dem ein Steuerkegel (29) betätigt wird, welcher beim Abheben vom Ventilkolben (35) eine Druckdifferenz an letzterem erzeugt, durch die der Ventilkolben (35) schlagartig (ca. 20 ms Ansprechzeit) von der Austrittsöffnung (15) im Gehäuse (1) abgehoben wird. Die Schliessung des Ventils erfolgt ebenso so schnell über die Federkraft F, welche im Zustand "stromlos" über den Steuerzylinder (29) wirkt.

Fig.1

0192607

- 1 -

Hydraulisches Düsenventil

*************************

Die Erfindung betrifft ein hydraulisches Düsenventil gemäss Oberbegriff des Patentanspruches 1.

Moderne Walzwerksanlagen, welche mit Computer gesteuerten Planheitsmess- und Regelanlagen ausgerüstet werden, verlangen geradezu nach einem extrem schnell (ca. 20 ms) ansprechenden Kühlsystem, welches zudem ganz ohne dynamisch beanspruchte synthetische Dichtungen auskommt und daher medium- und temperaturunempfindlich ist.

Es sind bereits Düsenventile in Kühlsystemen an Kalt- und Warmwalzwerken bekannt. Bei einem solchen Düsenventil liegt die Eintrittsöffnung der Düse normalerweise in einem Raum, der vom zu versprühenden Medium, welches unter Druck steht, ausgefüllt ist. Die marktüblichen Systeme sind entweder pneumatisch oder elektromagnetisch ansteuerbar, jedoch verwenden alle Membrane oder Dichtungen aus synthetischen Materialien, die sowohl chemisch wie der hohen mechanischen Beanspruchung (bis 1000 Schaltungen pro Stunde) nicht standhalten.

Ein weiterer Nachteil besteht darin, dass bei den pneumatischen Ansteuerungssystemen der Membran oder Hubkolben sehr lange Ansprechzeiten resultieren (bis 1 Sek.).

Es ist daher die Aufgabe der Erfindung, ein Ventil zu schaffen, das unempfindlich gegen aggressive Medien ist und das innerhalb von Hunderstelsekunden geöffnet und geschlossen werden kann sowie die geforderte Standzeit von ca. $10 \times 10^6$ Hubbewegungen ohne Schaden übersteht.

Nach der Erfindung werden die gestellten Aufgaben durch ein Sitzventil gemäss den kennzeichnenden Merkmalen des Patentanspruches 1 gelöst.

Es wird damit möglich, eine unbeschränkte Anzahl von Ventilen gleichzeitig zu öffnen und zu schliessen, indem der den Ventilkolben haltende Vorsteuerkolben elektromagnetisch betätigt wird.

Weitere vorteilhafte Ausbildungformen der Erfindung sind in den abhängigen Ansprüchen beschrieben.

In vorteilhafter Weise wird durch den Spalt bzw. und/oder die Nuten zwischen der Bohrung im Ventilkörper bzw. im Steuerkegel und/oder Ventilkolben das Medium zu den hintenliegenden Stirnflächen gelangen, so dass bei geschlossenem Ventil überall der gleiche Druck vorliegt. Beim Oeffnen hingegen liegt kurzzeitig eine Druckdifferenz vor, durch welche eine den Ventilkolben nach hinten verschiebende Kraft auf den Ventilkolben entsteht, weil durch die axiale Boh-

- 3 -

0192607

rung im Ventilkolben das in der Bohrung des Ventilkörpers befindliche Medium abströmen kann.

Durch die kegelstumpfförmige Ausgestaltung der Enden des Steuerkegels und des Ventilkolbens kann eine mit geringer Schliesskraft hohe Flächenpressung an den Dichtstellen erreicht werden.

Mit dem im Ventilkörper eingesetzten, den Steuerkegel umhüllenden Elektromagneten kann der Steuerkegel im wesentlichen verzögerungsfrei axial bewegt und damit durch das Freilegen der Bohrung im Ventilkolben die Druckdifferenz erzeugt werden, welche die Verschiebung des Ventilkolbens bewirkt.

In einfacher und vorteilhafter Weise lässt sich der Elektromagnet durch korrosionsfeste Materialien gegen das Medium abschoten.

Ein ins Gehäuse eingesetzter Ventilsitz hat den Vorteil, dass nur gerade dieser Teil und nicht das gesamte Gehäuse aus einem Material hergestellt sein muss, das gepaart mit dem Material des Kegelstumpfes am Ventilkolben einerseits eine einwandfreie Abdichtung gewährleistet und andererseits Millionen von Oeffnungs- und Schliessoperationen unbeschadet übersteht.

- 4 -    0192607

Durch das Weglassen irgendwelcher Dichtungen ist zudem eine Standfestigkeit erreicht, die alle bekannten Systeme bei weitem übertrifft.

Je nach Art der Verwendung können in dasselbe Gehäuse auch eine Vielzahl von Ventilen eingesetzt werden und gleichzeitig oder nach einem vorgegebenen Zeitplan geöffnet und geschlossen werden.

Anhand eines illustrierten Ausführungsbeispieles wird die Erfindung näher erläutert. Es zeigen:

Figur 1    ein Sitzventil geschlossen,

Figur 2    das Sitzventil während des Oeffnens,

Figur 3    das Sitzventil gemäss Figur 1 geöffnet.

In ein Gehäuse 1 mit einem Innenraum 3 ist in eine Oeffnung 5 ein Ventilkörper 7 eingesetzt. Eine Dichtung 9 (z.B. O-Ring) verhindert den Austritt eines durch eine Leitung 11 dem Innenraum 3 unter Druck, z.B. 6 bar, zugeführten flüssigen Mediums 13. Gegenüber der Oeffnung 5 ist im Gehäuse 1 eine weitere Oeffnung 15 angebracht, welche auf der Innenseite mit einem gehärteten Ventilsitz 17 versehen sein kann. Der Ventilsitz 17 kann am Umfang mit einem O-Ring 19 gegen das Gehäuse 1 abgedichtet sein.

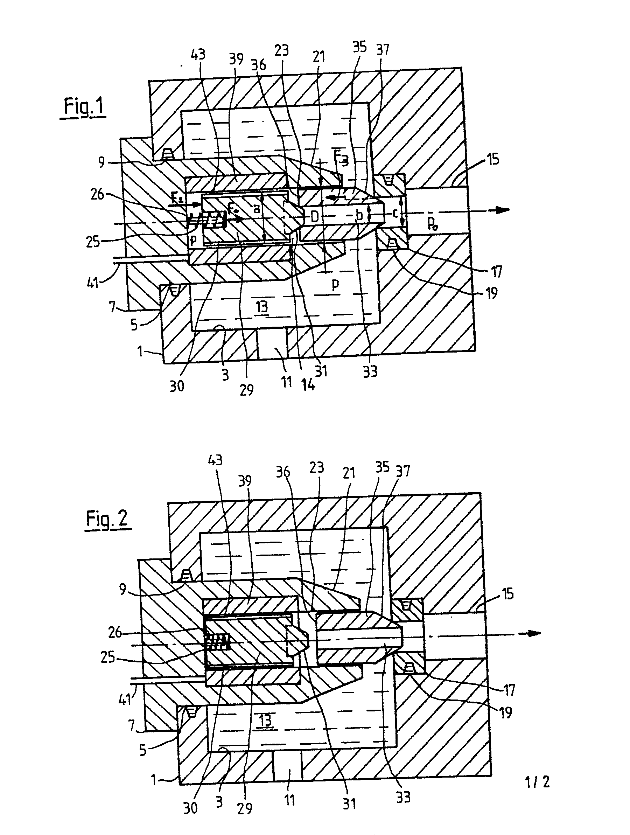

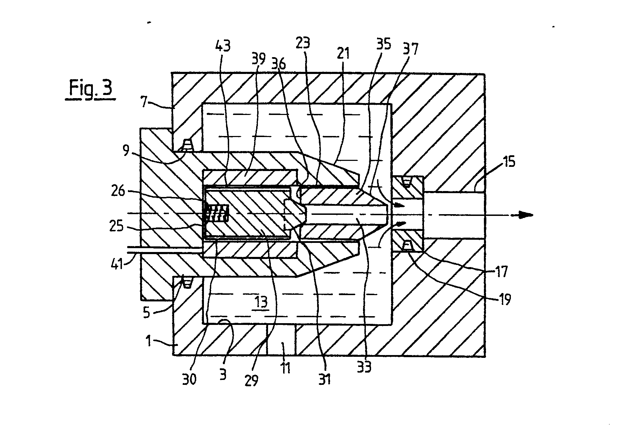

Im Ventilkörper 7, der zylindrisch ausgebildet sein und einen kegelstumpfförmigen Abschnitt 21 aufweisen kann, ist eine kozentrische, nicht durchgehende Bohrung 23 (Sackloch) angebracht. Am Grund der Bohrung 23 ist eine Feder 25, eingelegt, welche in Anlage mit dem hinteren Ende eines Steuerzylinders (Anker) 29 steht. Die Feder 27 kann lose eingelegt oder durch Führungsmittel 26, z.B. einen Bolzen, gehalten werden. Das vordere Ende des Steuerzylinders 29 kann einen eingesetzten, gehärteten Kegelstumpf 31 aufweisen und ragt in eine konzentrische Bohrung 33 eines Ventilkolbens 35 hinein. Das vordere Ende des Ventilkolbens 35 ist ebenfalls als Kegelstumpf 37 ausgebildet und ragt, da dessen kleiner Durchmesser geringer ist als derjenige des Ventilsitzes 17 in diesen hinein. Die Durchmesser a des Steuerkegels 29 und des Ventilkolbens 35 sind um einige Zehntelsmillimeter kleiner als der Durchmesser D der Bohrung 23. Am Steuerkegel 29 und/oder am Ventilkolben 35 können aussen zudem im wesentlichen axial verlaufende Nuten 30 angebracht sein. Auf der Gehäuseaussenseite kann auf die Oeffnung 15 eine Düse (nicht dargestellt) aufgesetzt sein. Im Bereich des Steuerkegels 29 wird die Bohrung 23 von einem Elektromagneten 39 umschlossen (z.B. 24 V=, 10W), dessen Stromzuführungen 41 hinten aus dem Ventilkörper 7 hinausgeführt sind. Der Elektromagnet 39 ist gegenüber der Bohrung 23 flüssigkeitsdicht abgeschlossen. Der Kegelstumpf 31 des Steuerkegels 29 liegt bündig an der Bohrung 33 des Ventilkolbens 35 an, der Kegelstumpf 37 liegt bündig am Ventilsitz 17 an, so dass der Raum 13 durch die von der Feder 25 nach vorne (rechts in der Figur 1) an den Ventilsitz 17 gedrängten Steuerkegel 29 und Ventilkolben 35 dicht verschlossen ist. Wird nun der Elektromagnet 39 erregt, d.h. eine Spannung angelegt, so verschiebt sich der aus magnetisierbarem Material hergestellte Steuerkegel (Anker) 29 infolge der Kraft des elektromagnetischen Feldes im Zentrum des Elektromagneten 39 gegen die Kraft $F_0$ der Feder 25 und gegen die hydraulische Kraft H, herrührend aus der Differenzkolbenfläche $H = b^2 \cdot \frac{\pi}{4} \cdot p$, wobei b der Durchmesser der Bohrung 33 ist, nach hinten (links in der Figur 2). Dabei wird die hintere bisher verschlossene Oeffnung der Bohrung 33 im Ventilkolben 35 freigelegt. Ein Teil des unter Druck p im Gehäuseinnenraum 3 befindlichen Mediums 13 kann so durch den Spalt 43 bzw. die Nuten 30 zwischen dem Ventilkolben 35 der Bohrung 23 zur Bohrung 33 im Ventilkolben 35 gelangen und nach aussen entweichen. Nun fällt der Druck p des Mediums 13 im Bereich 14 zwischen dem Steuerkegel 29 und dem Ventilkolben 35, so dass eine Druckdifferenz zwischen dem Gehäuseinnenraum 3 und im Bereich 14 entsteht. Diese hydraulische Kraft $H^1 = (a^2 - c^2) \cdot \frac{\pi}{4} \cdot \Delta p$ bewegt den Ventilkolben 35 nach links. Das hintere Ende des Ventilkolbens 35 gelangt dabei wieder in Anlage mit dem Kegelstumpf 31 des Steuerkegels 29. Der Durchtritt des Mediums 13 durch die Bohrung 33 wird beendet und das Medium 13 verlässt den Raum 3 nun ausschliesslich an der kreisringförmigen Oeffnung zwischen dem Kegelstumpf 37 und dem Ventilsitz 17 so lange der Elektromagnet 39 erregt bleibt (Figur 3).

Beim Abschalten der Erregerspannung am Elektromagneten 39 werden die Steuerkegel 29 und der Ventilkolben 35 durch

Kraft $F_o$ der Feder 25 nach vorne (rechts in den Figuren) geschoben und die Oeffnung 15 sofort verschlossen.

Damit die Feder 25 diese Verschiebung bewältigen kann, muss deren Kraft $F_o$ grösser sein als die vom fliessenden Medium 13 ausgeübte Kraft (Strömungskraft) zwischen dem Ventilsitz 17 und dem Kegelstumpf 37. In geschlossenem Zustand wird der Ventilkolben 35 dann mit einer Kraft gegen den Ventilsitz 17 gepresst, die sich aus der Kraft $F_o$ der Feder 25 und der hydraulischen Kraft $p \cdot \frac{\pi}{4} \cdot c^2 = F_2 - F_3$ zusammensetzt (c ist der Bohrungs-Durchmesser am Ventilsitz 17).

Das Ventil arbeitet sowohl horizontal als auch vertikal in beiden Richtungen.

Der Durchmesser D der Bohrung 23 ist vorzugsweise etwa 0,1 bis 0,5 mm grösser als der Durchmesser a des Steuerkegels 29 bzw. des Ventilkolbens 35. Die Grösse des Ringspaltes hängt einerseits vom Durchmesser der Bohrung 23 und anderseits von allfällig angebrachten Nuten 30 ab.

Patentansprüche

**************

1.  Elektromagnetisch gesteuertes, hydraulisches Düsenventil mit einem Gehäuse, in dessen Innenraum ein Ventilkörper eingesetzt ist, dadurch gekennzeichnet, dass der Ventilkörper (7) eine Bohrung (23) aufweist, in der koaxial zueinanderliegend ein aus magnetisierbarem Material hergestellter Steuerkegel (29) und ein Ventilkolben (35) verschiebbar eingelegt sind und durch eine Feder (25) auf eine am Gehäuse (1) angebrachte, dem Ventilkörper (7) gegenüberliegende Oeffnung (15) anpressbar sind.

2.  Elektromagnetisch gesteuertes, hydraulisches Düsenventil nach Anspruch 1, dadurch gekennzeichnet, dass die Bohrung (23) mit dem zu versprühenden Medium (13) in Verbindung steht.

3.  Elektromagnetisch gesteuertes, hydraulisches Düsenventil nach Anspruch 1 oder 2, dadurch gekennzeichnet, dass der Durchmesser (D) der Bohrung (23) 0,1 bis 0,5 mm grösser ist als der Durchmesser (a) des Steuerkegels (29) und des Ventilkolbens (35).

4.  Elektromagnetisch gesteuertes, hydraulisches Düsenventil nach Anspruch 3, dadurch gekennzeichnet, dass am Mantel des Steuerkegels (29) und/oder des Ventilkolbens (35) im wesentlichen axial verlaufende Nuten
(30) angebracht sind.

5.     Elektromagnetisch gesteuertes, hydraulisches Düsenventil nach einem der vorangehenden Ansprüche, dadurch
gekennzeichnet, dass im Ventilkolben (35) eine axial
verlaufende Bohrung (33) angebracht ist.

6.     Elektromagnetisch gesteuertes, hydraulisches Düsenventil nach einem der vorangehenden Ansprüche, dadurch
gekennzeichnet, dass an dem dem Ventilkolben (35) zugekehrten Ende des Steuerkegels (29) ein Kegelstumpf
(31) angebracht ist, dessen Ende einen geringeren
Durchmesser aufweist als die Bohrung (33) im Ventilkolben (35).

7.     Elektromagnetisch gesteuertes, hydraulisches Düsenventil nach Anspruch 6, dadurch gekennzeichnet, dass
am Ventilkolben (35) der Kegelstumpf (31) aus einem
gehärteten Material besteht.

8.     Elektromagnetisch gesteuertes, hydraulisches Düsenventil nach einem der vorangehenden Ansprüche, dadurch
gekennzeichnet, dass im Bereich des Steuerkegels (29) ein diesen umhüllender Elektromagnet (39) in den Ventilkörper (7) eingesetzt ist.

9. Elektromagnetisch gesteuertes, hydraulisches Düsenventil nach Anspruch 8, dadurch gekennzeichnet, dass der Elektromagnet (39) gegenüber der Bohrung (23) flüssigkeitsdicht abgeschlossen ist.

10. Elektromagnetisch gesteuertes, hydraulisches Düsenventil nach Anspruch 6, dadurch gekennzeichnet, dass an dem dem Innenraum (3) des Gehäuses (1) zugewendeten Ende der Oeffnung (15) ein gehärteter Ventilsitz (17) flüssigkeitsdicht eingesetzt ist.

11. Elektromagnetisch gesteuertes, hydraulisches Düsenventil nach einem der Ansprüche 4, 5 oder 6, dadurch gekennzeichnet, dass der Ventilkolben (35) aus einem gehärteten Material besteht.

12. Elektromagnetisch gesteuertes, hydraulisches Düsenventil nach Anspruch 9, dadurch gekennzeichnet, dass die vom erregten Elektromagneten (39) erzeugte Axialkraft auf den Steuerkegel (29) grösser ist als die Summe der Kräfte ($F_o$) der Feder (25) und der hydraulischen Kraft (H), wobei $H = b^2 \cdot \frac{\pi}{4} \cdot p$.

13. Elektromagnetisch gesteuertes, hydraulisches Düsenventil nach einem der vorangehenden Ansprüche, dadurch gekennzeichnet, dass im Gehäuse (1) mehrere Ventilkörper (7) eingesetzt sind.

14. Verwendung des Düsenventils nach Anspruch 1 in einem Kühlbalken in Walzwerken bis zu einer Umgebungstemperatur von 150° C.

Fig.1

Fig.2

Fig. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| A | BE-A- 702 275 (ITT)<br><br>* Seite 5, Zeile 17 - Seite 9, Zeile 25 *<br><br>--- | 1,2,5, 6,8,9, 12 | F 16 K 31/40 |
| A | DE-A-2 439 271 (OFFENWANGER)<br><br>* Seite 3, Zeile 19 - Seite 6, Zeile 25 *<br><br>--- | 1,2,4, 5,8,12 | |
| A | US-A-3 381 932 (O'KANE)<br>* Insgesamt *<br><br>----- | 1-4,10 | |

| | |
|---|---|
| | **RECHERCHIERTE SACHGEBIETE (Int Cl 4)**<br><br>F 16 K |

Der vorliegende Recherchenbericht wurde für alle Patentansprüche erstellt

| Recherchenort | Abschlußdatum der Recherche | Prüfer |
|---|---|---|
| DEN HAAG | 29-04-1986 | VERELST P.E.J. |

KATEGORIE DER GENANNTEN DOKUMENTE
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument